# EUROPÄISCHE PATENTSCHRIFT

(11) **EP 2 510 304 B1**
(45) Veröffentlichungstag und Bekanntmachung des Hinweises auf die Patenterteilung: **30.03.2016**
(21) Anmeldenummer: 10779313.5
(22) Anmeldetag: 18.11.2010
(51) Int. Cl.: F28F 21/04, C04B 41/83

(54) **WÄRMETAUSCHERROHR ODER WÄRMETAUSCHERPLATTE AUS HARZ-IMPRÄGNIERTEM SILICIUMCARBID**
HEAT EXCHANGER PLATE OR TUBE MADE OF RESIN-IMPREGNATED SILICON CARBIDE
TUBE OR PLAQUE D'ECHANGEUR DE CHALEUR EN CARBURE DE SILICIUM IMPRÉGNÉ DE RÉSINE

(30) Priorität: 11.12.2009 DE 102009054574
(43) Veröffentlichungstag der Anmeldung: 17.10.2012
(73) Patentinhaber: SGL Carbon SE, 65201 Wiesbaden (DE)
(72) Erfinder: FRANZ, Marcus, 86830 Schwabmünchen (DE); ÖTTINGER, Oswin, 86405 Meitingen (DE)
(86) Internationale Anmeldenummer: PCT/EP2010/067766
(87) Internationale Veröffentlichungsnummer: WO 2011/069802

(56) Entgegenhaltungen:
- EP-A1- 1 174 400
- DE-A1- 3 415 238
- DE-U1-202004 018 924
- GB-A- 1 238 392
- US-A- 5 792 717
- US-A- 6 126 749
- US-A1- 2006 269 683
- HURLEY J: "New silicon carbide composite is tested in outer space", MATERIALS PERFORMANCE, NACE INTERNATIONAL, HOUSTON, TX, US, Bd. 47, Nr. 9, 1. September 2008 (2008-09-01), Seiten 19-20, XP001517026, ISSN: 0094-1492
- MASAHIRO T; JUNICHI, U: "Silicon carbide-organic macromolecule composite materials for sliding parts", CHEMICAL ABSTRACTS, 14. November 1988 (1988-11-14), Seite 309, XP000155329, ISSN: 0009-2258

## Beschreibung

Gegenstand der vorliegenden Erfindung sind ein mit Harz imprägniertes Wärmetauscherrohr oder eine mit Harz imprägnierte Wärmetauscherplatte, Siliciumcarbid sowie aus ein Verfahren zu deren Herstellung.

Wärmetauscherrohre oder -blöcke umfassen üblicherweise Graphit. Graphit weist eine gute Wärmeleitfähigkeit auf, ist bruch- und druckfest, temperatur- und korrosionsbeständig.

Auch Werkstoffverbunde aus Graphit mit einem Harz sind in vielen technischen Anwendungen weit verbreitet. Beispielsweise wird Graphit zur Fertigung von Apparaten und Druckbehältern mit Phenolharz imprägniert, um einen dichten Werkstoff zu erhalten. Das zuvor offenporige Material liegt dabei entweder als block-, platten- oder rohrförmiges Halbzeug vor. Als Imprägniermittel wird Phenolharz verwendet, da Phenolharz eine ausreichende Temperaturbeständigkeit aufweist und zugleich chemisch gegen Säuren sehr beständig ist.

Nachteil dieses so nachbehandelten Werkstoffes ist, dass er nicht errosionsbeständig ist, und somit nur geringe Strömungsgeschwindigkeiten bei Flüssiganwendungen (z.B. Wärmetauscher) zulässig sind. Die zulässige Strömungsgeschwindigkeit verringert sich weiter, falls die Flüssigkeiten mit abrasiven Partikeln beladen ist. Daher ist ein Selbstreinigungseffekt in Wärmetauscherrohren oder - blöcken durch schnell strömende Medien, die ggf. mit Partikeln beladen sind, nicht gegeben bzw. nicht realisierbar. Dieser Selbstreinigungseffekt wäre aber erwünscht und könnte z.B. bei der Aufkonzentrierung von P₂O₅ angewendet werden. Der Vorteil, der daraus erwächst, zeigt sich in geringerer Stillstandszeit, weil die Reinigungsintervalle verlängert werden bzw. im optimalen Fall ganz wegfallen

In der Veröffentlichung "New Silicon carbide composite is tested in outer space", Materials Performance, Nace International, Houston, TX, US, Bd. 47, Nr. 9, 1. September 2008, Seiten 19 bis 20, offenbart Hurley et al. Wärmetauscher mit offenporigem Siliziumcarbidnetzwerk, dessen Poren mit Phenolharz imprägniert sind.

In der Veröffentlichung "Silicon carbide-organic macromolecule composite materials for sliding parts", Chemical Abstracts, 14. November 1988, Seite 309, offenbaren Masahiro und Junichi et al. poröse SiC-basierte Keramiken, die mit Phenolharzen imprägniert werden.

DE 3415238 A1 offenbart Wärmetauscher zur Wiederaufheizung von Rauchgasen, deren Rohre aus kunstharzimprägniertem Elektrographit hergestellt sind.

Aufgabe der vorliegenden Erfindung ist, ein Wärmetauscherrohr oder eine Wärmetauscherplatte zur Verfügung zu stellen, die hoch errosionsbeständig, abrasionsfest und dicht sind.

Diese Aufgabe wird durch ein Wärmetauscherrohr oder eine Wärmetauscherplatte mit den Merkmalen von Anspruch 1 und durch ein Verfahren mit den Merkmalen von Anspruch 5 gelöst.

Erfindungsgemäß werden ein Wärmetauscherrohr oder eine Wärmetauscherplatte zur Verfügung gestellt, die offenporiges Siliciumcarbid umfassen, das zumindest teilweise mit Harz imprägniert ist. Ein derartiges Wärmetauscherrohr oder eine derartige Wärmetauscherplatte sind hoch errosionsbeständig, abrasionsfest und dicht. Weiterhin sind ein derartiges Wärmetauscherrohr oder eine derartige Wärmetauscherplatte hoch wärmeleitend. Die Wärmeleitfähigkeit des Siliciumcarbids wird durch die Harzimprägnierung nicht beeinträchtigt. Vorzugsweise ist das Harz wärmegehärtet.

Das erfindungsgemäße Wärmetauscherrohr oder die erfindungsgemäße Wärmetauscherplatte sind derart aufgebaut, dass die offenen Poren des offenporigen Siliciumcarbids das Harz enthalten. Das erfindungsgemäße Wärmetauscherrohr oder die erfindungsgemäße Wärmetauscherplatte weisen an ihrer.

Oberfläche keinen geschlossenen Harzfilm auf. D.h., das Siliciumcarbid ist nicht vollständig von dem Harz bedeckt, vielmehr enthalten die offenen Poren des Siliciumcarbids das Harz, sodass das Siliciumcarbid zusammen mit dem Harz einen abgedichteten Körper ausbildet.

Das Siliciumcarbid weist offene Poren auf. Die offenen Poren können untereinander in vielfältiger Weise verbunden sein. Das offenporige Siliciumcarbid umfasst dann ein poröses Siliciumcarbidgerüst oder -netzwerk. Durch dieses Netzwerk von miteinander verbundenen Poren dringt beim Imprägnieren das Harz in das Siliciumcarbid ein und kann es unter geeigneten Bedingungen auch vollständig ausfüllen. Aus dem Netzwerk von Poren wird dann ein Netzwerk aus Harz. Auf diese Weise werden ein Wärmetauscherrohr oder eine Wärmetauscherplatte erthalten, die zwei jeweils für sich zusammenhaltende Netzwerke aufweisen. Das eine Netzwerk umfasst ein zusammenhängendes Gerüst aus Siliciumcarbid. Das andere Netzwerk umfasst in die Poren des Siliciumcarbids eingedrungenes Harz. Beide Netzwerke, das Siliciumcarbidnetzwerk und das Harznetzwerk, ergeben in Kombination die hervorragenden Eigenschaften des erfindungsgemäßen Wärmetauscherrohrs oder der erfindungsgemäßen Wärmetauscherplatte.

Das erfindungsgemäße Wärmetauscherrohr oder die erfindungsgemäße Wärmetauscherplatte sind gegen Flüssigkeiten und Gas hochpermeabel, wenn das Porennetzwerk des Siliciumcarbids vollständig mit gehärtetem Harz ausgefüllt ist.

Das Harz stellt ein Phenolharz dar. Bevorzugter stellt das Harz ein Resol dar. Als Resol wird ein Phenolharz bezeichnet, dessen Vernetzung in Form von Kondensation durch Basen mit einem Überschuss an Formaldehyd katalysiert wird. Hierbei werden stufenweise die Zustände eines Resols, Resitols und Resits durchlaufen, wobei entstehende flüchtige Reaktionsprodukte entweichen. In der ersten Stufe (Zustand A), Resol, ist das Harz noch löslich und schmelzbar, in der zweiten Stufe (Zustand B), Resitol, ist das Harz noch quellbar und erweicht beim Erhitzen, während in der dritten Stufe (Zustand C), Resit, eine vollständige Vernetzung eingetreten ist und das Harz unlöslich und unschmelzbar ist. Weist gehärtetes Phenolharz auf, insbesondere enthalten die offenen Poren des Siliciumcarbids bevorzugt ausgehärtetes Resolharz.

Als Epoxidharz eignen sich Harzsysteme, die Bispenhol A-diglycidylether oder Bispenhol F-diglycidylether enthalten. Diphenylbenzol kann ebenfalls zur Abdichtung verwendet werden. Bevorzugt kann auch ein Silazanharzsystem verwendet werden.

In einer bevorzugten Ausführungsform beträgt der Gewichtsanteil an Harz bis zu 50 %, bezogen auf den Körper. D.h., das Siliciumcarbid kann bis zu 100% seines eigenen Gewichtes an Harz aufnehmen. In einer besonders bevorzugten Form kann das Siliciumcarbid auch nur wenig z.B. nur 20 Gew.-% Harz bezogen auf sein eigenes Gewicht aufnehmen.

In einer bevorzugten Ausführungsform weist das offenporige Siliciumcarbid eine offene Porosität von 0 bis 80 Vol.-% und eine Rohdichte von 1,9 bis 3,5 g/cm³ auf.

Bevorzugter weist das offenporige Siliciumcarbid eine offene Porosität von 5 bis 15 Vol.-% und eine Rohdichte von 2,5 bis 3,1 g/cm³ auf. Die Porengröße des Siliciumcarbids kann variieren, obwohl eine gleichmäßige Verteilung einer vorbestimmten Porengröße bevorzugt ist. Die Porengröße liegt bevorzugt in dem Bereich von 0,05 bis 1,5 µm, bevorzugter von 0,1 bis 1,0 µm, noch bevorzugter von 0,2 bis 0,5 µm. In einer bevorzugten Ausführungsform umfasst das Siliciumcarbid 5 % offene Poren mit einer Porengröße von 1 µm und 8-10 % offene Poren mit einer Porengröße von 0,2 µm.

Weiterhin bevorzugt weist das offenporige Siliciumcarbid einen Si-Gehalt von unter 0,50 %, bevorzugter 0,35 %, auf. Noch bevorzugter stellt das offenporige Siliciumcarbid offenporiges Si-freies Siliciumcarbid dar. Beispielsweise stellt das offenporige Siliciumcarbid rekristallisiertes Siliciumcarbid (RSiC) dar. Das offenporige Siliciumcarbid kann alternativ nitridgebundenes Siliciumcarbid (NSiC) darstellen.

Das Siliciumcarbid kann mindestens einen keramischen oder mineralischen Füllstoff enthalten, wobei die Auswahl der Füllstoffe auf die Anwendung abzustimmen ist. Beispiele für Füllstoffe stellen Stoffe aus der Gruppe der natürlich vorkommenden Flockengraphite, der künstlich hergestellten Elektrographite, Ruße oder Kohlenstoffe, Graphit- oder Kohlenstofffasern dar. Desweiteren können keramische oder mineralische Füllstoffe in Korn-, Plättchen- oder Faserform wie Silikate, Carbonate, Sulfate, Oxide, Gläser oder ausgewählte Mischungen davon verwendet werden. Besonders bevorzugt ist das offenporige Siliciumcarbid Kohlenstofffaser-verstärkt, d.h. ein so genannter C/SiC-Werkstoff.

Das mit Harz imprägnierte Siliciumcarbid ist mit mindestens einer Kohlenstofffaser umwickelt bzw. verstärkt. Vorzugsweise ist das imprägnierte Siliciumcarbid netzartig unter Vorspannung mit mindestens einer Kohlenstofffaser umwickelt. Durch die Armierung wird die Druckfestigkeit des Wärmetauscherrohrs oder der Wärmetauscherplatte gesteiget.

Das Rohr ist mit mindestens einer Kohlenstofffaser unter hoher Vorspannung netzartig umwickelt, sodass seine Druckfestigkeit weiterhin gesteigert ist. Das spezifische Verhalten der Kohlenstofffaser bewirkt, dass auch bei stark wechselnder bzw. schwellender Belastung des Rohres die Vorspannung der Armierung erhalten bleibt. Aufgrund des negativen thermischen Längenausdehnungskoeffizienten der Kohlenstofffaser wird die Armierung bei einer Temperaturerhöhung weiter vorgespannt, der Berst- und Dichthaltedruck ist bei höherer Temperatur größer als bei Raumtemperatur. Die Kohlenstofffasefaserverstärkung verbessert die Eigenschaften von mit Harz imprägnierten Siliciumcarbidrohren wie folgt: Erhöhung des Berstdrucks, das Rohr wird unempfindlicher gegenüber Dampfschlägen und unzulässigen Überschreitungen des Betriebsdrucks, da der Berstdruck des Rohres bei Raumtemperatur je nach Rohrabmessung um 30 bis 40 % gegenüber dem nicht verstärkten Rohr erhöht wird.

Das erfindungsgemäße Wärmetauscherrohr oder die erfindungsgemäße Wärmetauscherplatte sind durch das folgende Verfahren herstellbar, das die Schritte
a) Bereitstellen von offenporigem Siliciumcarbid,
b) zumindest teilweise Imprägnieren des offenporigen Siliciumcarbids mit Harz, und
c) Härten des Harzes.
umfasst.

Durch dieses Verfahren werden die in der Regel im Apparatebau erforderliche Dichthei des Wärmetauscherrohrs oder der Wärmetauscherplatte durch die Imprägnierung des Siliciumcarbids mit dem Harz erreicht. Bei dem erfindungsgemäßen Verfahren wird bevorzugt im Vakuum-DruckVerfahren das Harz in die offenen Poren des Siliciumcarbids gepresst und diese vollständig gefüllt. Anschließend wird das Harz bei erhöhter Temperatur gehärtet.

Durch die Harzimprägnierung und -härtung werden die Festigkeit des Wärmetauscherrohrs oder der Wärmetauscherplatte im Vergleich zu dem Siliciumcarbid vor der Imprägnierung um den Faktor 2 is 3 erhöht, ohne die Wärmeleitfähigkeit zu beeinträchtigen.

Schritt a) des erfindungsgemäßen Verfahrens involviert insbesondere die Bereitstellung von rekristallisiertem Siliciumcarbid. Das bereitgestellte Siliciumcarbid weist bevorzugt eine Rohdichte zwischen 1,9 und 3,5 g/cm³ auf. Weiterhin bevorzugt weist das in Schritt a) bereitgestellte Siliciumcarbid eine offene Porosität von 5 bis 15 Vol.-% auf. Insbesondere liegt das Siliciumcarbid in der gewünschten Form des herzustellenden Bauteils vor. Bevorzugt wird das Siliciumcarbid in Form eines Rohr oder einer Wärmetauscherplatte bereitgestellt.

Schritt b) des erfindungsgemäßen Verfahrens umfasst insbesondere das Füllen der offenen Poren des Siliciumcarbids. Das einmal in die Poren des Siliciumcarbids eingebrachte Harz neigt nicht dazu, wieder aus den Poren auszulaufen. Neben dem Benetzungsverhalten sind vor allem folgende Gesichtspunkte maßgeblich:
1. Beim Imprägnieren werden bevorzugt besondere Techniken angewandt, wie z.B. Vakuum- oder Vakuum-Druck-Imprägnierung. Mit Hilfe solcher Techniken wird die Befüllung eines Teiles der vorhandenen Poren erst ermöglicht, z.B. werden so die Befüllungswiderstande - wie das Durchströmen enger Porenhalse - überwunden. Ohne die Anwendung besonderer Maßnahmen kann das so einmal eingefüllte Harz nicht wieder aus dem Körper austreten.
2. Im Falle der Verwendung eines Resolharzes steigt, wie vorstehend dargestellt, seine Viskosität über die Zustände A bis C allmählich. Dieser Anstieg ist bei niedrigen Temperaturen gering (Lagerstabilität, Zustand A, Resol), wird aber bei höheren Temperaturen sehr ausgeprägt, das Harz geliert (Zustand B, Resitol). Solch angeliertes Harz kann praktisch nicht mehr aus den Poren des Siliciumcarbids austreten. Auch das durch Vernetzung erhaltene unlösliche und unschmelzbare Harz (Zustand C, Resit) kann nicht mehr aus den Poren des Siliciumcarbids austreten.

Das in Schritt b) verwendete Harz weist bevorzugt eine Viskosität in dem Bereich von 5 bis 4000 mpa·s auf. Das Harz kann in reiner Form bei der Imprägnierung eingesetzt werden oder in einem geeigneten Lösungsmittel gelöst sein. Beispielsweise kann das Harz in Wasser, ggf. in Kombination mit Alkoholen, gelöst sein. Der Harzgehalt in dem Lösungsmittel hängt von der gewünschten Konsistenz des zur Imprägnierung einzusetzenden Harzes und der Porengröße der offenen Poren des Siliciumcarbids ab.

Die in Schritt b) des erfindungsgemäßen Verfahrens durchgeführte Imprägnierung des Siliciumcarbids kann durch ein Tauchverfahren realisiert werden. Vorzugsweise wird das Siliciumcarbid vor der Imprägnierung einer Entlüftungsbehandlung unterzogen. Das ggf. gelöste Harz kann ebenfalls vor der Imprägnierung einer Entlüftungsbehandlung unterzogen werden. Beispielsweise wird ein Tauchverfahren mit vorherigem Evakuieren eines das Siliciumcarbid enthaltenden Gefäßes und Fluten des evakuierten Gefäßes mit dem ggf. in einem Lösungsmittel gelösten Harz, sodass das Siliciumcarbid in dem Harz ein- bzw. untertaucht verwendet. Gegebenenfalls wird das Gefäß nach dem Fluten mit dem Harz noch mit einem Gasdruck beaufschlagt. Das mit dem Harz imprägnierte Siliciumcarbid kann weiterhin einer Entlüftungsbehandlung unterzogen werden, um gasförmige Bestandteile in dem Harz und dem Siliciumcarbid bei vermindertem Druck zu evakuieren. Die Entlüftungsbehandlung kann beliebig oft wiederholt werden.

Will man nur eine oberflächennahe oder teilweise Imprägnierung des Siliciumcarbids erreichen, wird die Imprägnierdauer verkürzt oder es werden die Flächen, von denen das Imprägnieren ausgehen soll, entsprechend mit Harz eingestrichen oder besprüht oder es wird das Siliciumcarbid nur teilweise getaucht. Nach dieser Behandlung wird überschüssiges Harz von der Oberfläche beispielsweise durch Abstreichen entfernt.

Schritt b) des erfindungsgemäßen Verfahrens kann beliebig oft wiederholt werden. Je nach der Porosität des Siliciumcarbids und dem davon abhängigen offenen Porenvolumen kann das Siliciumcarbid durch Durchführung des erfindungsgemäßen Verfahrens bis zu 100% seines eigenen Gewichtes an Harz aufnehmen. Bei einem geringeren offenen Porenvolumen kann das Siliciumcarbid auch nur wenig z.B. nur 20 Gew.-% Harz bezogen auf sein eigenes Gewicht aufnehmen.

Anschließend wird das Harz gehärtet. Die in Schritt c) durchgeführte Härtung erfolgt bevorzugt bei Temperaturen von 120 bis 180°C innerhalb von bis zu zwei Stunden, drucklos oder bei Drücken von 0,5 bis 1,5 bar. Bei hohen Temperaturen, d. h. bei 170 bis 180°C, genügt im Allgemeinen eine Härtungszeit bis zu 15 Minuten. Je höher die Temperatur, desto geringer ist die Härtungszeit.

Die durch das erfindungsgemäße Verfahren hergestellten Wärmetauscherrohre oder Wärmetauscherplatten enthalten Keine Fehlstellen wie Blasen oder Risse, die durch Reaktionen des Harzes beim Aushärten verursacht werden, können. Zudem sind das Wärmetauscherrohr oder die Wärmetauscherptatte so mit geringem Aufwand herstellbar. Er ist korrosionsbeständig, wärmeleitfähig und in Abhängigkeit vom Verdichtungsgrad von technisch flüssigkeitsdurchlässig bis hin zu technisch gasdicht.

Das erfindungsgemäße verfahren umfasst weiterhin im Anschluss an den Schritt c) den Schritt d) Umwickeln Wärmetauscherrohre oder Wärmetauscherplatten der mit mindestens einer Kohlenstofffaser. Das mit Harz imprägnierte Siliciumcarbid wird so mit mindestens einer Kohlenstofffaser armiert. Auf diese Weise wird die Druckfestigkeit der Wärmetauscherrohre oder Wärmetauscherplatten erhöht. Bevorzugt wird das mit Harz imprägnierte Siliciumcarbid mit mindestens einer Kohlenstofffaser unter hoher Vorspannung netzartig umwickelt.

In dem erfindungsgemäßen Verfahren wird Phenolharz als Harz eingesetzt. Phenolharz weist eine ausreichende Temperaturbeständigkeit auf und ist sehr beständig gegen Säuren und stellt somit einen idealen Werkstoff zur Herstellung des erfindungsgemäßen Körpers dar.

Im erfindungsgemäßen Verfahren wird in Schritt a) offenporiges Siliciumcarbid bereitgestellt, das wahlweise mindestens einen keramischen oder mineralischen Füllstoff enthält. Bevorzugt wird ein Kohlenstofffaserverstärktes Siliciumcarbid (C/SiC) bereitgestellt.

Ein Wärmetauscher, umfasst, weist beispielsweise den folgenden Aufbau auf: Der Wärmetauscher umfasst einen Mantel, der einen Einlass und einen Auslass für ein Fluid aufweist. In dem Mantel können zudem Umlenkbleche angeordnet sein, die ausgehend von dem Mantel in den Innenraum des Mantels hineinragen und derart parallel angeordnet sind, dass sie eine Zirkulation des sich im Mantel befindenden Fluids unterstützen. Weiterhin ist in dem Mantel mindestens ein Rohrbündel angeordnet. Enden der Rohre des Rohrbündels sind an einem Rohrboden angeordnet, der mit dem Mantel fluiddicht verbunden ist. Der Rohrboden weist mindestens einen Einlass und einen Auslass für ein weiteres Fluid auf, das in den Rohren des Rohrbündels zirkuliert und das eine andere Temperatur als die des Fluids in dem Mantel zwecks Wärmeübertrags zwischen den beiden Fluiden aufweist. Das erfindungsgemäße Wärmetauscherrohr eignet sich besonders zur Verwendung als Rohr in dem Rohrbündel des Wärmetauschers. Ein Rohr lässt aufgrund seiner hohen Festigkeit eine Selbstreinigung durch ein schnell zirkulierendes Fluid zu, das ggf. mit Partikeln beladen ist. Die anderen vorstehend erwähnten Bauteile oder ggf. weitere eingebaute Bauteile sind aus Graphit, beschichtetem Graphit, Metallplatten oder gummierten Metallplatten gefertigt.

Weitere Merkmale und Vorteile der Erfindung werden nun unter Bezugnahme auf das nachfolgende Beispiel erläutert, ohne diese auf es einzuschränken.

### Beispiel

Es wurde ein SiC-Rohr mit den Abmessungen Ø 35 x 30 mm verwendet. Ein Rohr mit der Bezeichnung Halsic-R ist von der Firma Morgan Advanced Ceramics W Haldenwanger Technische Keramik GmbH & Co KG, Waldkraiburg, Deutschland kommerziell erhältlich. Vor der Imprägnierung des Siliciumcarbidrohres mit Phenolharz wurden 5 Proben untersucht. Die gemessenen Eigenschaften dieser Proben sowie die Standardabweichung s sind in Tabelle 1 zusammengefasst. Die Eigenschaften wurden nach der Prüfnorm DIN ermittelt. Die Permeabilität der Proben war nicht messbar, da das Material zu undicht ist.

**Tabelle 1**

| Probe Nr. | | 1 | 2 | 3 | 4 | 5 | S |
|---|---|---|---|---|---|---|---|
| Elastizitätsmodul (GPa) | 1* | 131,3 | 130,9 | 134,3 | 133,6 | 132,5 | 1,7 |
| Festigkeit (MPa) | 1* | 23,3 | 35,2 | 37,4 | 40,8 | 34,2 | 7,6 |
| Porenvolumen > Ø 1 µm | | 5,0 | 4,2 | 5,0 | 5,8 | 5,0 | 0,7 |
| *: 1 = Längsprobe | | | | | | | |

Die Eigenschaften des Siliciumcarbidrohres nach der Behandlung mit Phenolharz sowie die Standardabweichung s sind in Tabelle 2 zusammengefasst. Das Porenvolumen der Proben wurde nicht gemessen, da die Poren des Siliciumcarbids nach der Imprägnierung mit dem Harz ausgefüllt und daher nicht mehr vorhanden waren.

**Tabelle 2**

| Probe Nr. | | 1 | 2 | 3 | 4 | 5 | S |
|---|---|---|---|---|---|---|---|
| Elastizitätsmodul (GPa) | 1* | 115,6 | 119,1 | 119,7 | 122,6 | 119,3 | 2,9 |
| Festigkeit (MPa) | 1* | 93,7 | 81,8 | 84,0 | 79,9 | 84,8 | 6,2 |
| Permeabilität cm²/s | 6* | 2,3x10⁻⁵ | 2,2x10⁻⁵ | 1,2x10⁻⁵ | 2,6x10⁻⁵ | 2,1x10⁻⁵ | 6,1x10⁻⁶ |
| *: 1 = Längsprobe, 6 = Querprobe | | | | | | | |

Wie aus einem Vergleich der Tabellen 1 und 2 ersichtlich ist, ist der Elastizitätsmodul des mit Phenolharz imprägnierten Siliciumcarbids leicht geringer als der des unbehandelten Rohres, während die Festigkeit des imprägnierten Rohres um den Faktor 2 bis 3 ansteigt. Mittels der Harzimprägnierung des Siliciumcarbidrohres wird die Festigkeit des Rohrs erheblich gesteigert.

## Patentansprüche

1. Wärmetauscherrohr oder Wärmetauscherplatte aus offenporigem Siliziumcarbidnetzwerk, dessen Poren zumindest teilweise mit gehärtetem Phenolharz imprägniert sind, **dadurch gekennzeichnet, dass** mit dem Phenolharz so imprägniert worden ist, dass das Wärmetauscherrohr oder die Wärmetauscherplatte an ihrer Oberfläche keinen geschlossenen Harzfilm aufweist und dass dieses oder diese mit mindestens einer Kohlenstofffaser umwickelt bzw. verstärkt ist.

2. Wärmetauscherrohr oder Wärmetauscherplatte nach Anspruch 1, **dadurch gekennzeichnet, dass** der Gewichtsanteil an Phenolharz bis zu 50% beträgt.

3. Wärmetauscherrohr oder Wärmetauscherplatte nach einem der Ansprüche 1 bis 2, **dadurch gekennzeichnet, dass** das offenporige Siliciumcarbid eine offene Porosität von 0 bis 80 Vol.-% und eine Rohdichte von 1,9 bis 3,5 g/cm³ aufweist.

4. Wärmetauscherrohr oder Wärmetauscherplatte nach einem der Ansprüche 1 bis 3, **dadurch gekennzeichnet, dass** das Siliciumcarbid mindestens einen mineralischen Füllstoff enthält.

5. Verfahren zur Herstellung eines Wärmetauscherrohrs oder einer Wärmetauscherplatte, wobei ein offenporiges Siliciumcarbidnetzwerk bereitgestellt wird, die Poren des Siliciumcarbidnetzwerks mit Phenolharz imprägniert werden, das Phenolharz gehärtet wird, **dadurch gekennzeichnet, dass** mit dem Phenolharz so imprägniert wird, dass das Wärmetauscherrohr oder die Wärmetauscherplatte an ihrer Oberfläche keinen geschlossenen Harzfilm aufweisen und dass dieses oder diese mit mindestens einer Kohlenstofffaser umwickelt bzw. verstärkt ist.

6. Verfahren nach Anspruch 5 weiterhin umfassend, dass nach dem Härten des Phenolharzes das Wärmetauscherrohr oder die Wärmetauscherplatte mit mindestens einer Kohlenstofffaser umwickelt wird.

7. Verfahren nach Anspruch 6, **dadurch gekennzeichnet, dass** das Siliciumcarbid mindestens einen mineralischen Füllstoff enthält.

## Claims

1. Heat exchanger tube or heat exchanger plate consisting of an open-pore silicon carbide network, the pores of which are at least partially impregnated with a cured phenolic resin, **characterised in that** impregnation with the cured phenolic resin was carried out in such a manner that the heat exchanger tube or the heat exchanger plate does not have a closed resin film on its surface and **in that** said heat exchanger tube or said heat exchanger plate is wrapped in or reinforced by at least one carbon fibre.

2. Heat exchanger tube or heat exchanger plate according to claim 1, **characterised in that** the proportional weight of the phenolic resin is up to 50 %.

3. Heat exchanger tube or heat exchanger plate according to any of claims 1 to 2, **characterised in that** the open-pore silicon carbide has an open porosity of between 0 and 80 vol. % and a bulk density of between 1.9 and 3.5 g/cm3.

4. Heat exchanger tube or heat exchanger plate according to any of claims 1 to 3, **characterised in that** the silicon carbide contains at least one mineral filling material.

5. Method for producing a heat exchanger tube or a heat exchanger plate, an open-pore silicon carbide network being provided, the pores of the silicon carbide network being impregnated with phenolic resin, the phenolic resin being cured, **characterised in that** impregnation with the cured phenolic resin is carried out in such a manner that the heat exchanger tube or the heat exchanger plate does not have a closed resin film on its surface and **in that** said heat exchanger tube or said heat exchanger plate is wrapped in or reinforced by at least one carbon fibre.

6. Method according to claim 5, further comprising wrapping the heat exchanger tube or the heat exchanger plate in at least one carbon fibre after the phenolic has been cured.

7. Method according to claim 6, **characterised in that** the silicon carbide contains at least one mineral filling material.

## Revendications

1. Tube d'échangeur de chaleur ou plaque d'échangeur de chaleur en réseau de carbure de silicium à pores ouverts dont les pores sont imprégnés au moins partiellement de résine phénolique durcie, **caractérisé en ce que** l'imprégnation avec la résine phénolique a été effectuée de telle sorte que le tube d'échangeur de chaleur ou la plaque d'échangeur de chaleur ne présente à sa surface aucun film de résine fermé, et **en ce que** ce tube ou cette plaque est enveloppé(e) ou renforcé(e) avec au moins une fibre de carbone.

2. Tube d'échangeur de chaleur ou plaque d'échangeur de chaleur selon la revendication 1, **caractérisé en ce que** la fraction en poids de résine phénolique atteint jusqu'à 50%.

3. Tube d'échangeur de chaleur ou plaque d'échangeur de chaleur selon l'une des revendications 1 à 2, **caractérisé en ce que** le carbure de silicium à pores ouverts présente une porosité ouverte de 0 à 80 %-vol. et une masse volumique apparente de 1,9 à 3,5 g/cm³.

4. Tube d'échangeur de chaleur ou plaque d'échangeur de chaleur selon l'une des revendications 1 à 3, **caractérisé en ce que** le carbure de silicium contient au moins une charge minérale.

5. Procédé de fabrication d'un tube d'échangeur de chaleur ou d'une plaque d'échangeur de chaleur, dans lequel un réseau de carbure de silicium à pores ouverts est fourni, les pores du réseau de carbure de silicium sont imprégnés de résine phénolique, la résine phénolique est durcie, **caractérisé en ce que** l'imprégnation avec la résine phénolique est effectuée de telle sorte que le tube d'échangeur de chaleur ou la plaque d'échangeur de chaleur ne présente à sa surface aucun film de résine fermé, et **en ce que** ce tube ou cette plaque est enveloppé(e) ou renforcé(e) avec au moins une fibre de carbone.

6. Procédé selon la revendication 5, comprenant en outre le fait que, après le durcissement de la résine phénolique, le tube d'échangeur de chaleur ou la plaque d'échangeur de chaleur est enveloppé(e) avec au moins une fibre de carbone.

7. Procédé selon la revendication 6, **caractérisé en ce que** le carbure de silicium contient au moins une charge minérale.
